# EUROPEAN PATENT APPLICATION

(11) **EP 4 845 090 A1**
(43) Date of publication of application: **25.11.2026**
(21) Application number: 26177629.8
(22) Date of filing: 08.05.2026
(51) Int. Cl.: H04L 9/08, G06F 21/16, G06F 40/284

(54) **METHOD AND SYSTEM FOR ROBUST WATERMARKING OF LARGE LANGUAGE MODEL TEXT OUTPUTS VIA MAJORITY-VOTING-BASED SEEDING**

(30) Priority: 19.05.2025 US 202519212224
(71) Applicant: Bytedance Technology Ltd., KY1 - 1205 Grand Cayman Cayman Islands (KY); Beijing Zitiao Network Technology Co., Ltd., Beijing 100190 (CN)
(72) Inventor: Lu, Donghang, Culver City, CA, 90230 (US); Zhang, Wanrong, Culver City, CA, 90230 (US); Du, Jian, Culver City, CA, 90230 (US); Yan, Qiang, Chaoyang District, Beijing, 100028 (CN)
(74) Representative: Grünecker Patent- und Rechtsanwälte PartG mbB

(57) **Abstract**

Methods (400, 500), systems (700), and apparatus, including computer programs encoded on computer storage media, are provided. One example method (400) includes obtaining (402) *n* tokens preceding a target position; generating (404), using a deterministic function, *n* values for the *n* tokens; generating (406) a first seed based on the *n* values using a majority voting function; generating (408), using a pseudorandom function based on the first seed, *K* random numbers each corresponding to a token in a vocabulary of *K* tokens, where *n* and *K* are positive integers; determining (410), based on a random number of the *K* random numbers that corresponds to a *k^{th}* token (*k =* 1, 2, *... , K*) in the vocabulary of *K* tokens, a probability of the *k^{th}* token being sampled for the target position; and sampling (412), from the vocabulary of *K* tokens, a token for the target position.

## Description

### TECHNICAL FIELD

This specification relates to machine learning, and in particular, to managing watermarks for language models.

### BACKGROUND

Language models can make inferences, generate content, and provide services based on prompts received from users. However, the prompts may include sensitive information and need privacy protection. Without proper protection, the sensitive information could be exposed to unauthorized access, misuse, or breaches, posing risks to individuals and organizations.

### SUMMARY

This specification describes technologies for managing watermarks for language models. According to a first aspect, a method is provided. The method includes obtaining *n* tokens preceding a target position; generating, using a deterministic function, *n* values for the *n* tokens; generating a first seed based on the *n* values using a majority voting function; generating, using a pseudorandom function based on the first seed, *K* random numbers each corresponding to a token in a vocabulary of *K* tokens, where *n* and *K* are positive integers; determining, based on a random number of the *K* random numbers that corresponds to a *k^{th}* token (*k* = 1, 2, ... , *K*) in the vocabulary of *K* tokens, a probability of the *k^{th}* token being sampled for the target position; and sampling, from the vocabulary of *K* tokens, a token for the target position.

With reference to the first aspect, in some implementations, the deterministic function includes a Hash function configured to generate a value having *m* bits based on a token and a key, where *m* is a positive integer.

With reference to the first aspect, in some implementations, the *n* values and the first seed each have *m* bits, where *m* is a positive integer. A *j^{th}* bit (*j* = 1, 2, ... *m*) in the first seed is a majority bit among a *j^{th}* bit of each of *n* values.

With reference to the first aspect, in some implementations, the method includes, for the *k^{th}* token in the vocabulary of *K* tokens: determining, an initial probability of the *k^{th}* token being sampled for the target position based on a logit of the *k^{th}* token; and determining the probability of the *k^{th}* token being sampled for the target position based on the initial probability and the random number corresponding to the *k^{th}* token.

With reference to the first aspect, in some implementations, the method includes: obtaining a sequence of *L* tokens, where *L* is a positive integer greater than *n*; for an *l^{th}* token (*l* = *n +* 1, *n* + 2, ... , *L*) in the sequence of *L* tokens: determining *n* values using the deterministic function based on *n* tokens preceding the *l^{th}* token; determining, using the majority voting function based on the *n* values, a second seed; and determining, using the pseudorandom function based on the second seed, a random number corresponding to the *l^{th}* token.

With reference to the first aspect, in some implementations, the method further includes: determining whether a sum of *W* random numbers corresponding to *W* tokens in the sequence of *L* tokens is greater than a predefined threshold, where *W* is a positive integer smaller than *L*; and in response to determining that the sum of the *W* random numbers is greater than the predefined threshold, determining that the sequence of *L* tokens is generated by a watermarked language model.

With reference to the first aspect, in some implementations, the method is implemented by one or more servers running a watermarked language model.

According to a second aspect, a method is provided. The method includes generating, using a pseudorandom function (PRF), a random number corresponding to a first token in a vocabulary; determining a first logit of the first token with respect to a target position in a sequence of tokens; determining, based on the first logit, the random number, and a scaling factor, a second logit of the first token with respect to the target position; determining, based on the second logit, a probability of the first token being sampled for the target position; and sampling, from the vocabulary based on the probability, a token for the target position.

With reference to the second aspect, in some implementations, the vocabulary includes *K* tokens, where K is a positive integer. The method includes: generating, using the PRF, *K* random numbers corresponding to the *K* tokens; determining *K* first logits of the *K* tokens with respect to the target position; determining *K* second logits of the *K* tokens with respect to the target position, where a second logit of a *k^{th}* token (*k*=*1, 2,* ..., *K*) is determined based on a first logic of the *k^{th}* token, a random number corresponding to the *k^{th}* token, and the scaling factor; and determining, based on the *K* second logits, probabilities of the *K* tokens being sampled for the target position.

With reference to the second aspect, in some implementations, the second logit is determined based on a sum of the first logit and a product of the random number and the scaling factor.

With reference to the second aspect, in some implementations, the second logit is determined based on the first logit, the random number, the scaling factor and a correction term. The correction term is determined based on an expected probability of the first token being sampled for the target position. The expected probability is determined based on the scaling factor and a probability distribution of all possible random numbers generated using the PRF.

With reference to the second aspect, in some implementations, the correction term is determined based on a first term of a Taylor expansion of the expected probability.

With reference to the second aspect, in some implementations, the correction term is determined based on first two terms of a Taylor expansion of the expected probability.

With reference to the second aspect, in some implementations, the method includes generating a seed of the PRF based on *n* tokens preceding the target position, where *n* is a positive integer.

According to a third aspect, one or more computer-readable storage media is provided. The one or more computer-readable storage media stores one or more instructions that, when executable by one or more computers, cause the one or more computers to perform the method according to the first aspect or one and/or more implementations of the first aspect, and the second aspect and/or one or more implementations of the second aspect.

According to a fourth aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect and/or one or more implementations of the first aspect, and the second aspect and/or one or more implementations of the second aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example system having a client device and one or more servers running a language model.
FIGS. 2A-2B illustrate an example watermarking scheme based on a majority-voting-based seeding.
FIG. 3 illustrates an example watermarking detection scheme.
FIG. 4 is a flow diagram of an example process of managing watermarks for language models.
FIG. 5 is a flow diagram of an example process of managing watermarks for language models.
FIG. 6 illustrates example effects of implementing majority voting-based seeding and/or scaling of watermarking strength.
FIG. 7 is an example computing system.

Like reference numbers and designations in the various drawings indicate like elements.

### DETAILED DESCRIPTION

This present disclosure provides techniques for managing watermarks for language models. Language models, such as large language models, are neural networks trained on massive text corpora, enabling them to generate human-like texts across diverse domains. As language models become increasingly sophisticated and widely adopted, watermarking has emerged as a promising technique for detecting whether a given text is generated by a human or by a language model.

For example, in a classic green-red watermarking scheme, when generating the next token during model inference, the language model can first apply a hash function to the preceding *n* tokens to derive a seed. The seed can then be used as a key to a pseudo-random number generator (PRNG), which can assign every token in a vocabulary into one of two sets: a "green" set and a "red" set. The language model can then be constrained to sample the next token only from the "green" set. For another example, some watermarking schemes can use PRNG to perturb the language model's token logits or output probabilities. As such, the PRNG can introduce subtle, statistically detectable shifts into the output distribution, thereby embedding a watermark in the generated text that can be verified post hoc.

In some cases, when the seed of the PRNG is derived from the preceding *n* tokens, alterations to the preceding *n* tokens (e.g., modifying one of the tokens) may result in a different seed, which can result in a different output from the PRNG. As such, the watermarking scheme may fail, as the watermarks may become indetectable.

The present disclosure provides techniques to increase the robustness of watermarking schemes, such that the watermarking schemes may be less susceptible to text alteration. In some implementations, when generating a seed based on *n* tokens preceding a target position, instead of generating a seed based on a single Hash output, multiple Hash outputs can be produced based on the preceding *n* tokens (e.g., a Hash output for each of the preceding *n* tokens), and a majority voting function can be applied to the multiple Hash outputs to produce the seed.

The disclosed techniques can achieve one or more technical benefits/advantages. For example, by employing majority voting in the seeding process, minor text modifications are less likely to cause the generation of a different seed. As such, the watermarking scheme can be more stable, more reliable, and more accurate during verification, achieving a controlled trade-off between robustness and responsiveness. For another example, the majority voting-based seeding process does not alter the underlying watermarking mechanism and is therefore compatible with existing watermarking techniques based on probability perturbation. Further, by leveraging a statistical majority vote rather than a single pseudo-random output, the approach provides improved robustness without incurring additional computational overhead. In some implementations, different or additional advantages can be achieved.

The present disclosure further provides techniques to modulate watermarking strength. In some implementations, when introducing a random number generated by PRNG into token logits, the random number can be scaled by a scaling factor. Further, a correction term can be introduced into the token logits to mitigate biases to the sampling process due to the random number scaled by the scaling factor.

The disclosed techniques can achieve one or more technical benefits/advantages. For example, by introducing a tunable scaling factor, fine-grained control over watermark strength can be achieved. The watermark strength can be increased to enhance detectability, or reduced to reduce distortion in the generated text. In contrast, existing watermarking schemes may either assume a fixed perturbation strength, or require modifications such as adding multiple PRFs, which can increase computation overhead. As an example, Gumbel Sampling can introduce random noise into the logits before normalization (e.g., softmax), making token selection inherently stochastic, but Gumbel Sampling cannot provide a direct strength control mechanism, as the randomness is inherent in the sampling process. Consequently, watermark detectability in Gumbel Sampling may be implicitly tied to the model's sampling temperature, rather than an explicitly tunable strength parameter. As another example, the Soft Red List method can modulate watermark strength by adjusting the proportion of "red" and "green" list tokens. While this approach allows for some control over watermark intensity, it may directly distort the language model's original token probability distribution, which can degrade generation quality, especially in low-entropy text where forced probability shifts can disrupt fluency.

For another example, the combination of PRNG and a tunable scaling factor can provide a more principled and computationally efficient means to balance text quality and watermark detectability, compared to other watermarking schemes. As an example, the Soft Red List method may enhance the strength of watermarks by introducing controlled distortion into the token selection process, which may degrade text quality. As another example, the non-distortionary variant method may avoid altering expected probabilities, but may still yield suboptimal token choices by assigning zero probability to certain tokens, thereby disrupting fluency, especially in low-entropy contexts. In comparison, the combination of PRNG and the tunable scaling factor can preserve the relative ranking of token probabilities and avoid hard exclusions. In some implementations, different or additional advantages can be achieved.

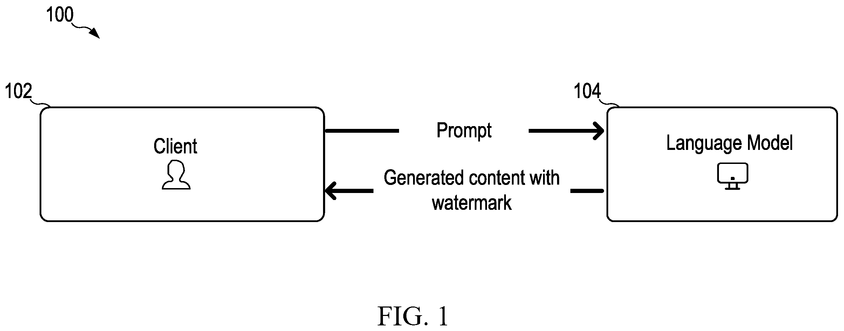

FIG. 1 is a diagram of an example system 100 having a client device 102 and one or more servers 104 running a language model. The system 100 can be an example of a computing environment in which watermarking techniques provided in the present disclosure can be implemented.

The system 100 includes a client device 102 and server(s) 104 running a language model. The server(s) 104 can be an application service platform providing one or more cloud-based applications and/or services to support one or more web-enabled native applications on the client device 102. The applications/services provided by the server(s) 104 may include but are not limited to conversational query and analysis, information classification and/or generalization, presentation applications, word processing applications, web site authoring applications, collaboration platforms, communications platforms, and/or other types of applications in which users may create, view, and/or modify various types of electronic content. As shown in FIG. 1, the server(s) 104 can implement a language model to provide at least a portion of the applications/services. The client device 102 and the server(s) 104 can communicate via a network connection. The network may be a combination of one or more public and/or private networks and may be implemented at least in part by the Internet.

In some implementations, the client device 102 can be a computing device that may be implemented as a portable electronic device, such as a mobile phone, a tablet computer, a laptop computer, a portable digital assistant device, a portable game console, and/or other such device. The client device 102 can also be implemented in computing devices having other form factors, such as a desktop computer, a vehicle onboard computing system, a kiosk, a point-of-sale system, a video game console, and/or other types of computing devices in other implementations. While the example implementation illustrated in FIG. 1 includes a single client device 102, other implementations may include a different number of client devices that utilize services provided by server(s) 104.

The server(s) 104 can receive requests from the client device 102 and process the requests. In some implementations, a request can be a prompt received from a user via the client device 102. The prompt can instruct the language model to generate a response or perform a specific task. For example, the prompt can include information that helps the language model to understand the context, intent, and desired output and/or guides the AI's behavior and shapes its response. The requests may include but are not limited to requests to create, view, and/or modify various types of electronic content and/or obtain templates for creating and/or modifying the electronic content.

The language model can be a machine learning model trained to generate content in response to a prompt received from the client device. The prompt can be in a natural language. In a non-limiting example, the generated content may include one or more sentences or paragraphs of textual content on a particular topic included in the prompt, structured or semi-structured instructions for rendering a slide or slides for a presentation, a spreadsheet, a chart, and/or other types of textual content. In some implementations, the language model can be implemented using a large language model (LLM), such as Generative Pre-trained Transformer 3 (GPT3), or GPT4 model. Other implementations may utilize other models or other generative models to generate the content in response to a prompt received from a user.

For example, in response to a prompt from a user, the language model can generate content (e.g., text) by generating a sequence of tokens (***t*** = {*t*₁*, t*₂, ... }). Each token can be sampled from a vocabulary (V) of tokens utilized by the language model. During an inference process, the language model can compute a logit (*L_{H}*(*v*)) for each token in *V* for a specific position (*H*) in ***t**.* The logit can be a score or a metric that indicates the relevance (e.g., semantic relevance) of a respective token in the given context. Based on the logits of tokens in V, the language model can apply a normalization function (e.g., a softmax function) to determine a probability distribution of each token being sampled for the specific position (*H*) in ***t**.* For example, the probability distribution over V can be computed as: ${p}_{H} \left(v\right) = \frac{exp \left({L}_{H}\left(v\right)\right)}{{\sum }_{i ∈ V} exp \left({L}_{H}\left(i\right)\right)} , v ∈ V$ The token at position *H* can then be sampled from the V based on the probability distribution, where a token having a higher logit may have a greater probability of being sampled.

In some implementations, the vocabulary (*V*) can include a vast number of tokens (e.g., tens of thousands to hundreds of thousands of tokens). For ease of illustration, the vocabulary (*V*) utilized by the language mode includes *K* tokens, where *K* is a positive integer.

In some implementations, the language model can be watermarked. That is, the language model can be configured to embed a verifiable (e.g., cryptographically verifiable) signal into its generated content, such that the embedded signal can be detected post hoc by authorized entities. In some watermarking implementations (e.g., zero-bit watermarking schemes), the language model can modify the token sampling probabilities to induce statistically identifiable patterns in the generated token sequences, while preserving linguistic fluency and semantic coherence.

As discussed above, a standard language model (denoted as 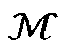 ) can sample the next token according to a probability distribution (*p_{H}*) over V by applying the softmax function to logit scores of tokens in *V.* In comparison, a watermarked language model (denoted as 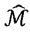 ) can produce an adjusted probability distribution ( $\hat{{p}_{H}}$), e.g., by subtly shifting the probability distribution based on a secret key. For example, the shifting can be achieved through perturbing the logits, or perturbing an initial probability distribution (*p_{H}*) and reapplying the softmax function. The perturbations are deterministic and reproducible. That is, given the same prior context and secret key, the watermarked language model can generate the same perturbations. As such, a watermarking scheme can enable post hoc verification of whether a given sequence of tokens (e.g., a text) originates from a specific watermarked language model or not. In some implementations, the watermarked language model ( 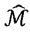 ) can sample tokens based on a new conditional token distribution *p̂ₖ*, where the adjusted probabilities are dependent on a user prompt (*x*) and a context (e.g., ${t}_{1}^{k - 1}$) of the token to be sampled, such as: $\hat{{p}_{k}} : = {P}_{\hat{M}} \left[{t}_{k}=⋅{t}_{1}^{k - 1},x\right]$

In some implementations, pseudo-random functions (PRFs) can be applied when generating watermarks for language models. A PRF can be a deterministic, key-dependent function that generates pseudorandom outputs. Outputs of the PRF can be the same with the same input and the same secret key, but the outputs can appear random to a party that does not possess the secret key. For example, the language model can apply a PRF to generate a set of random numbers, e.g., ***r*** = {*r*₁, *r*₂, ... , *r_{K}*}, where each random number (*rᵢ*) can be used to adjust (e.g., perturb) the sampling probability of a token in the vocabulary (V). In some implementations, the PRF can generate random numbers that are token-specific. For example, by inputting the same secret key and the same token (or a sequence of tokens), the PRF can generate the same random number (or the same set of random numbers).

In some implementations, the secret key of a PRF may be fixed, which can result in a fixed shift in the probability distribution across *V*, regardless of contextual variation. As such, the watermarking scheme may result in a fixed pattern of over-selecting certain tokens and/or under-selecting certain tokens, which may degrade the accuracy and quality of the language model.

In some implementations, the secret key of a PRF may be dynamically generated based on the context of the input token to the PRF. In such case, the secret key can also be referred to as a seed. For example, the seed can be generated based on one or more tokens in the context preceding the input token to the PRF. For example, the language model can utilize a deterministic function to generate the seed based on the preceding token(s). The deterministic function may be one of a Hash function, a PRF, an advanced encryption standard (AES) function, a message authentication code (MAC) function, or any function that can produce the same output for a given input. In some implementations, the language model can utilize a keyed Hash function to enhance the unpredictability and security of the seed generation process. The keyed Hash function can generate an output (e.g., a value having *m* bits) based on one or more input tokens and a key (e.g., a secret key). The keyed Hash function can produce the same output with the same input token(s) and the same secret key. In some implementations, as compared to a conventional Hash function, a keyed hash function can incorporate a secret key into the hashing process, thereby introducing an additional layer of cryptographic security against the risk of adversarial reverse engineering. For instance, an attacker may try to apply brute-force techniques to compute the Hash outputs of the *n* preceding tokens and reverse-engineer corresponding seeds based on the Hash outputs. By collecting and analyzing the frequency of tokens associated with the same seed, the attacker could infer the underlying red/green token distribution embedded in the watermarking scheme. As such, the attacker may try to fabricate AI-generated content to mimic the statistical token distribution of human-generated content. The keyed hash function can enhance cryptographic security against attackers by ensuring that only parties with knowledge of the secret key can accurately compute the seed.

In some cases, by generating the seed for the PRF directly from the context of an input token to the PRF, the watermarking scheme may be vulnerable to modifications to the sequence of tokens to be verified. For instance, when verifying whether a sequence of tokens is generated by a watermarked language model, even minor modifications to the sequence (e.g., token substitution, insertion, and/or deletion) can alter the input to the deterministic function generating the seed. As such, a seed generated during verification may be different from the seed generated during watermark generation, thereby causing the watermark to become undetectable.

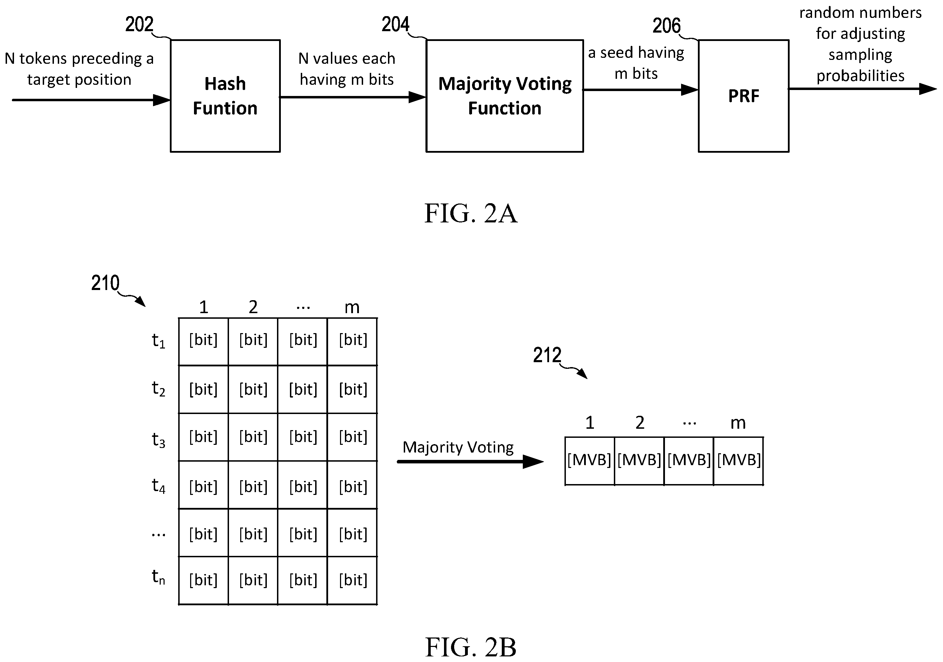

In some implementations, the watermarking scheme can be less susceptible to modifications by increasing the robustness of the seeding process. As explained in greater detail with respect to FIG. 2 and Algorithm 1, the language model can first generate multiple outputs using the deterministic function (e.g., multiple Hash outputs), and then generate the seed by using a majority voting function based on the multiple outputs.

Algorithm 1 describes an example process for generating a seed based on a majority voting function.

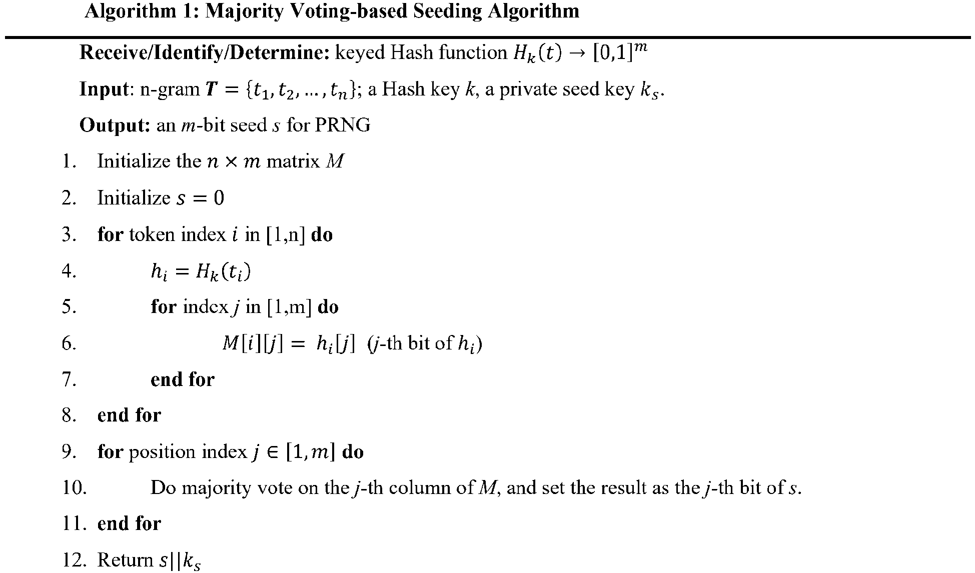

FIGS. 2A-2B illustrate an example watermarking scheme based on a majority-voting-based seeding process. The process with respect to FIGS. 2A-2B can be applied to both a watermark generation process (e.g., when a watermarked language model generates a response to a user prompt) and a watermark detection process (e.g., when verifying whether a text is generated by a watermarked language model or not).

The process with respect to FIGS. 2A-2B and Algorithm 1 can be performed iteratively, where each iteration can be performed with respect to one target position in a sequence of tokens, while the next position can be the target position for the next iteration. In each iteration, as shown in steps 1-2 of Algorithm 1, a matrix of *n* rows and *m* columns (e.g., matrix 200 of FIG. 2B) can be initialized (e.g., set to null), and the seed (s) can be initialized (e.g., set to 0).

In some implementations, *n* tokens (***T*** = {*t*₁, *t*₂, ... , *tₙ*}, also referred to as *n*-gram) preceding the target position are obtained to generate a seed for a PRF, where *n* is a positive integer. During watermark generation, the target position can be the next position in a sequence, where a token needs to be sampled from a vocabulary (*V*) of the language model. The probability distribution of the sampling can be adjusted based on random numbers produced by a PRF using the seed generated based on the *n* preceding tokens. The language model can thereby add watermarks to the generated sequence. During watermark detection, the target position can be a position in a sequence of bits being verified, while the seed generated based on the *n* preceding tokens can be used as an input to the same PRF that regenerated a random number corresponding to the target position.

At 202 (e.g., steps 3-4 of Algorithm 1), the *n* preceding tokens can be used as inputs to a deterministic function. In some implementations, the deterministic function can be a keyed Hash function *Hₖ(t)* that can generate a value (*hᵢ*) having *m* bits based on an input token and a secret key. As such, *Hₖ*(*t*) can generate *n* values (*h*₁, *h*₁, ... , *hₙ*) each having *m* bits, where each value (*hᵢ*) is generated by inputting the *i^{th}* token of the *n* preceding tokens, *i* = 1, 2, ..., *n*.

As shown in steps 5-6 of Algorithm 1, the *n* values (*h*₁, *h*₁, ..., *hₙ*) can form a matrix 210 of *n* rows and *m* columns. Each row of the matrix 210 can be a value (*hᵢ*), and each column of the matrix 210 can be a bitwise concatenation of bits of the same position in the *n* values.

At 204 (e.g., steps 9-10 of Algorithm 1), the *n* values (*h*₁, *h*₁, ... , *hₙ*), or the matrix 210 including the *n* values (*h*₁, *h*₁, *..., hₙ*), can be used as an input to a majority voting function. The majority voting function can take a set of binary inputs and output a new binary value for each bit position by selecting the most frequent bit among all inputs at that position. For example, as shown in FIG. 2B, for each column (Column *j*, *j* = 1, 2, ... , *m*), the majority voting function can select the most frequent bit among all bits in the Column *j* as the bit for the *j^{th}* position in a seed 212. For example, if Column *j* has "1"s than "0"s, "1" can be selected for the *j^{th}* position in the seed 212; if Column *j* has more "0"s than "1"s, "0" can be selected for the *j^{th}* position in the seed 212. As such, the seed 212 having *m* bits can be generated based on the matrix 210 by using the majority voting function, where each bit in the seed 212 is a majority bit among bits in the *n* values of the corresponding position.

In some implementations, the seed 212 generated using majority voting can be more stable and less susceptible to modification, compared to a seed generated directly from preceding tokens. For example, if a portion of the *n* tokens preceding the target position is modified before verification, the seed generated using majority voting may remain unchanged.

At 206, the seed 212 can be used as the secret key to a PRF. For example, during a watermarking generation process, by inputting the seed 212 and each token in the vocabulary (*V*) to the PRF function, the PRF can produce a random number for each token in the vocabulary (*V*). The random number can be used to adjust the sampling probability of the respective token with respect to the target position. For another example, during a watermarking detection process, by inputting the seed 212 and each token in the sequence under verification, the PRF can produce a random number for each token in the vocabulary (*V*). By comparing a sum of the random numbers with a predefined threshold, it can be determined whether the sequence under verification was generated by a watermarked language model.

In some implementations, the secret key to the PRF can be a combination of the seed 212 and a private seed key (*kₛ*), such as a concatenation *s*∥*kₛ*. For example, the private seed key may be a fixed key that does not change with respect to the context of the target position. In some implementations, by incorporating the private seed key, the cryptographic security of the secret key to the PRF can be further enhanced, e.g., by enhancing the randomness of the secret key to obscure its value range from potential adversaries.

In some implementations, as discussed in greater detail with respect to Algorithm 2, a scaling factor (*λ*) can be introduced to scale a weight of the random numbers, so that the watermark strength (e.g., a magnitude of probability perturbation induced by the PRF-generated random numbers) can be modulated.

Algorithm 2 describes an example process for generating watermarked content by a language model while introducing a scaling factor to modulate the strength of the watermark.

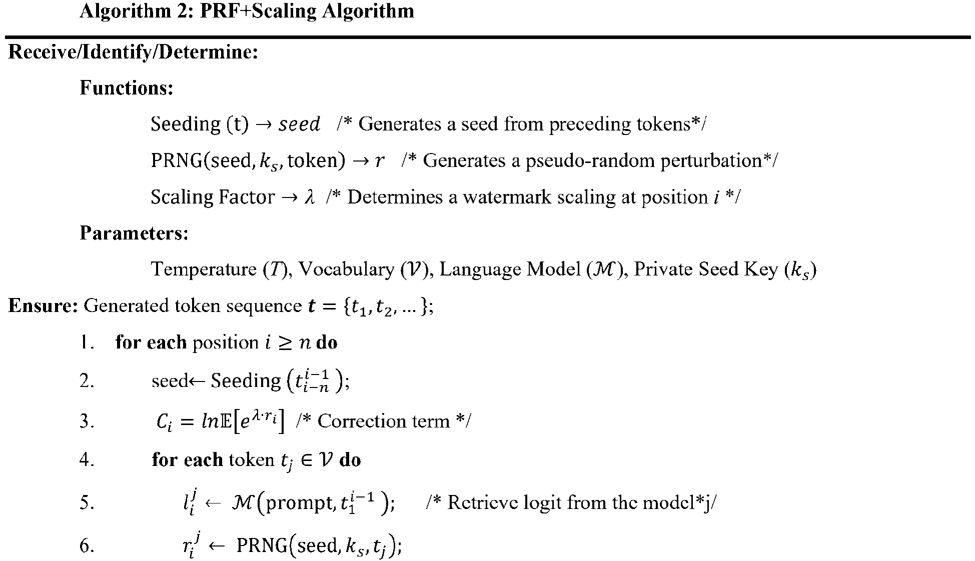

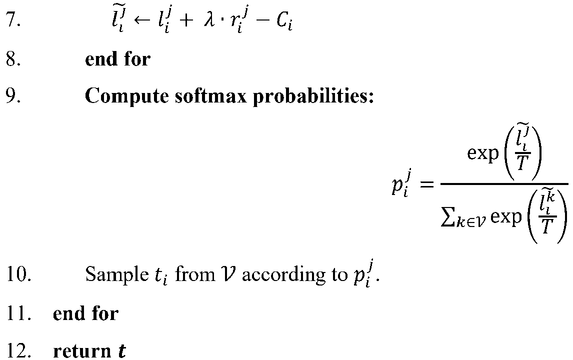

As shown by step 1 of Algorithm 2, the process with respect to Algorithm 2 can be performed iteratively *(i=n, n*+*1,* ...), where each iteration can be performed with respect to one target position (e.g., the i-th position) in a sequence of tokens (***t** =* {*t*₁, *t*₂, ...}), and a next position (e.g., the (i+1)-th position) can be the target position for a next iteration. During watermark generation, the target position can be the next position in a sequence under generation (e.g., during model inference), where a token needs to be sampled from a vocabulary (*V*) of the language model.

At step 2 of Algorithm 2, for the i-th position, the language model can generate a seed for a PRF. The seed can be generated based on the seeding process discussed with respect to Algorithm 1 and FIG. 2, or based on any suitable seeding process. For example, the seed can be generated using a deterministic function based on *n* tokens (e.g., *tᵢ₋ₙ* to *t*_{*i*-1}) preceding the target position.

At step 3 of Algorithm 2, the language model determines a correction term (*Cᵢ*) corresponding to the target position. The correction term can be used to offset the bias to the logits and/or sampling probabilities introduced by the random numbers scaled by the scaling factor. In some implementations, the correction term can be calculated based on an expected probability ( $E \left[{{p}^{˜}}^{j}\right]$) of the first token being sampled for the target position, while the expected probability takes into consideration the effect of the random numbers scaled by the scaling factor on the initial logit ( ${l}_{i}^{k}$). In some implementations, the expected probability ( $E \left[{{p}^{˜}}^{j}\right]$) can be determined based on the scaling factor (*λ*) and a probability distribution (*rᵢ*) of all possible random numbers generated for the i-th position using the PRF. The probability distribution (*rᵢ*) of all possible random numbers may be dependent on the seed generated at step 2. For example: $E \left[{{p}^{˜}}^{j}\right] = E \left[\frac{exp \left({l}_{i}^{j}+λ⋅{r}_{i}\right)}{{\sum }_{k ∈ V} \left(exp\left({l}_{i}^{k}+λ⋅{r}_{i}\right)\right)}\right]$

According to Taylor Expansion: $E \left[{{p}^{˜}}^{j}\right] = {p}^{j} + \frac{{λ}^{2}}{2 \left(E\left[{\left({r}_{i}\right)}^{2}\right]{p}^{j}-{p}^{j}{\sum }_{k ∈ V} {p}^{k} E \left[{\left({r}_{i}\right)}^{2}\right] + ⋯\right)}$

In some implementations, the correction term (*Cᵢ*) can be determined based on the first term of the Taylor expansion of $E \left[{{p}^{˜}}^{j}\right]$, for example: ${C}_{i} = ln E \left[{e}^{λ ⋅ {r}_{i}}\right]$

In some implementations, a more refined correction term ( ${C}_{i}^{′}$) can be determined based on the first two terms of the Taylor expansion of $E \left[{{p}^{˜}}^{j}\right]$, for example: ${C}_{i}^{′} = {C}_{i} + \frac{{λ}^{2}}{2} {\sum }_{k ∈ V} {p}^{k} E \left[{\left({r}_{i}\right)}^{2}\right]$

At steps 4-5 of Algorithm 2, the language model can determine a first logit ( ${l}_{i}^{j}$) for each token (*tⱼ*) in the vocabulary (*V*) with respect to the target position. In some implementations, the first logit can be an initial logit determined based on the relevance of a respective token in V with respect to the user prompt and/or context of the target position (e.g., *t*₁ to *t*_{*i*-1}).

At step 6 of Algorithm 2, the language model can generate a random number (e.g., a pseudorandom number ${r}_{i}^{j}$) for each token (*tⱼ*) in *V.* ${r}_{i}^{j}$ can be generated by inputting *tⱼ,* the seed generated at step 2, and/or the private seed key (*kₛ*) to the PRF.

At step 7 of Algorithm 2, the language model can determine a second logit ( ${{l}_{ι}^{j}}^{˜}$) for each token (*tⱼ*) in *V.* The second logit can adjust the first logit ( ${l}_{i}^{j}$) using the random number ( ${r}_{i}^{j}$) scaled by the scaling factor (*λ*), such as: ${{l}_{ι}^{j}}^{˜} ← {l}_{i}^{j} + λ ⋅ {r}_{i}^{j} - {C}_{i}$

In some implementations, the scaling factor can modulate the weight of the random number as a linear coefficient, as an exponent, as a temperature metric, or by any suitable scaling scheme. In some implementations, the scaling factor (*λ*) can be the same for all positions in the sequence under generation. In some implementations, the scaling factor (*λ*) can be different for different positions in the sequence under generation. For example, a scaling factor can be determined individually for each position in a sequence under generation.

Introducing the random number scaled by the scaling factor in the logits can alter the probabilities of the tokens being sampled, thereby introducing unintended biases to the sampling process. In some implementations, to mitigate the biases, the correction term (*Cᵢ* or ${C}_{i}^{′}$) can be introduced into the calculation of the second logit, so that the overall logit shift does not overly distort the expected sampling probabilities, and the expected sampling probabilities can remain consistent with the original output of the language model (e.g., with no watermarks).

For example, as discussed with respect to step 3 of Algorithm 2, the correction term (*Cᵢ*) can be determined based on the first term of the Taylor Expansion of $E \left[{{p}^{˜}}^{j}\right]$. The correction term (*Cᵢ*) can eliminate first-order bias caused by exponentiation in the normalization function (e.g., softmax function). In some cases, while *Cᵢ* can correct the softmax exponentiation bias, a small residual distortion may remain due to Jensen's inequality, indicating that increasing the watermark strength can shift sampling probabilities, e.g., in a non-linear way.

For another example, the correction term ( ${C}_{i}^{′}$) can be determined based on the first two terms of the Taylor Expansion of $E \left[{{p}^{˜}}^{j}\right]$. The correction term ( ${C}_{i}^{′}$) can further eliminate second-order bias caused by exponentiation in the normalization function.

In some implementations, the correction term may be calculated in a different way, e.g., based on how the random numbers are generated, how the scaling factor applies to the random numbers, etc.

At step 9 of Algorithm 2, the language model determines a probability ( ${p}_{i}^{j}$) of each token (*tⱼ*) in *V* being sampled for the i-th position. The probability ( ${p}_{i}^{j}$) can be determined by using a normalization function (e.g., a softmax function) based on the second logit ( ${{l}_{ι}^{j}}^{˜}$). In some implementations, the probability ( ${p}_{i}^{j}$) can be further determined based on a temperature (T) of the language model, which can modulate the entropy of the output probability distribution by scaling the logits prior to softmax normalization. For example, ${p}_{i}^{j}$ can be computed as: ${p}_{i}^{j} = \frac{exp \left(\frac{{{l}_{i}^{j}}^{˜}}{T}\right)}{{\sum }_{k ∈ V} exp \left(\frac{{{l}_{i}^{k}}^{˜}}{T}\right)}$

At step 10 of Algorithm 2, the language model can sample a token for the i-th position based on sampling probabilities of all tokens in *V.* In some implementations, a token having a higher second logit has a higher probability of being sampled, while a token having a lower second logit has a lower probability of being sampled.

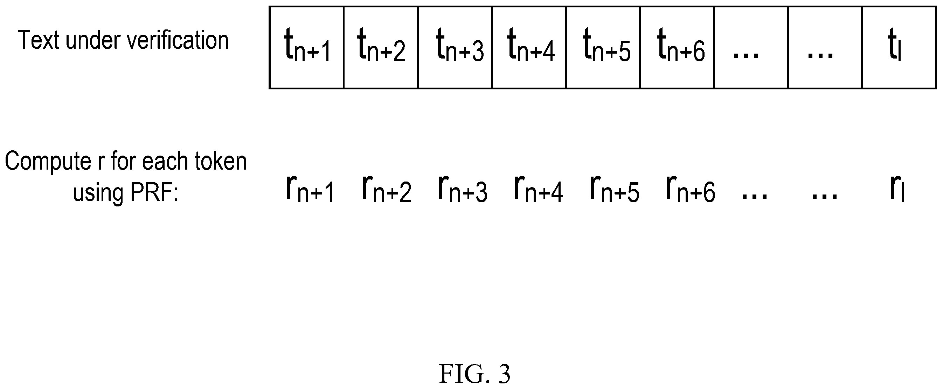

FIG. 3 illustrates an example watermarking detection scheme. As an example, a text having a sequence of L tokens (***T_{L}*** = {*t*₁, *t*₂, ... , *t_{L}*}) can be verified as to whether it was generated by a specific watermarked machine or not. During the verification, a statistical hypothesis testing approach can be used to detect the structured randomness (e.g., pseudorandom numbers generated by PRF) introduced during text generation. The sequence **(*T_{L}*)** can include a relatively large number of tokens, so that the result of the verification can have statistical significance.

In some implementations, a seed to a PRF can be dynamically generated, e.g., based on *n* tokens preceding the target position. During verification, for each token (*tₗ*, *l = n* + 1, *n* + 2, ..., *L*), a seed can be computed based on *n* preceding tokens and the same key using the same deterministic function (e.g., the same Hash function) of the specific watermarked language model. Then, based on the seeds, a pseudorandom number (*rₗ*) can be computed for each token (*tₗ*) using the same PRF of the specific watermarked language model.

After obtaining the pseudorandom numbers *r*_{*n*+1} to *r_{L}*, the verification can be performed by comparing the sum of the pseudorandom numbers to a predefined threshold. The sum of the pseudorandom numbers can be defined as a score: $Score = \frac{1}{L - n} {\sum }_{i = n + 1}^{L} {r}_{i}$

During text generation, tokens in *V* corresponding to larger pseudorandom numbers have greater probabilities of being sampled than tokens in *V* corresponding to smaller pseudorandom numbers. Therefore, if ***T_{L}*** was generated by the specific watermarked language model, during verification, the calculated score can be higher (e.g., significantly higher), compared to the scenario where ***T_{L}*** was not generated by the specific watermarked language model. As such, by comparing the calculated score to a predefined threshold, the text can be verified as to whether it was generated by the specific watermarked machine or not. For example, the calculated score is higher than the predefined threshold, it can be determined that the text was generated by the specific watermarked language model.

In some implementations, the predefined threshold can be set based on empirical score distributions of watermarked and non-watermarked texts, while balancing the desired trade-off between the false positive rate (FPR) and the true positive rate (TPR). The predefined threshold can be further set depending on the operational constraints of the watermarking scheme (e.g., tolerable error rates) and/or regulatory requirements.

In some implementations, a sub-portion of *t*_{*n*+1} to *t,* or a different portion of tokens in ***T_{L}*** can be selected for verification. For example, the score can be determined based on a sum of *W* random numbers corresponding to *W* tokens in ***T_{L},*** where *W* is a positive integer smaller than L. The predefined threshold can also vary with respect to *W*.

It is understood that the statistical hypothesis testing approach to detect watermark can be applied not only to watermarks generated by PRF with scaling, but can also be applied to other watermarking schemes, such as watermarks generated by Gumbel Sampling or SynthID with single PRF.

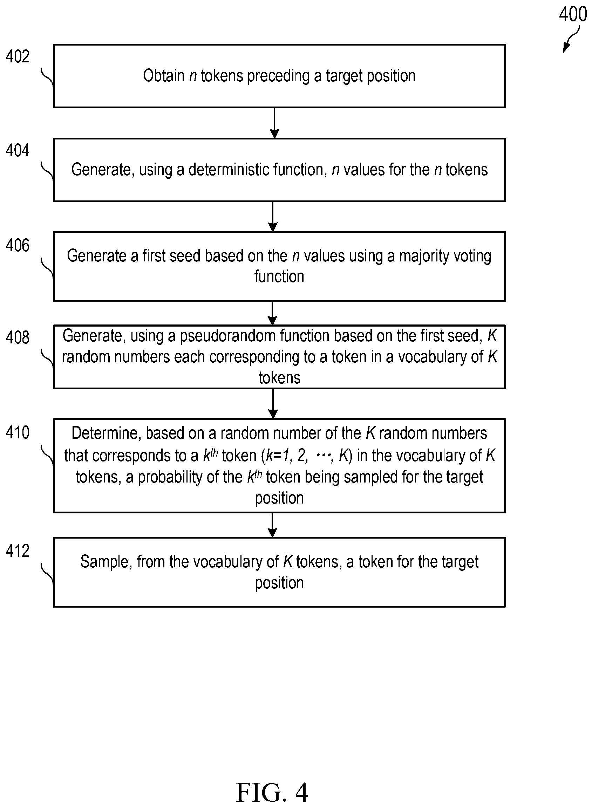

FIG. 4 is a flow diagram of an example process 400 of managing watermarks for language models. The example process 400 can be implemented by one or more servers executing a language model (e.g., server(s) 104 of FIG. 1). The language model can be a watermarked language model that can embed a verifiable signal as a watermark into its generated content. The example process 400 can also be implemented by one or more devices configured to verify whether a sequence of tokens (e.g., a random text) is generated by a watermarked language. The operations shown in process 400 may not be exhaustive, and other operations can be performed as well before, after, or in between any of the illustrated operations. Further, some of the operations may be omitted, performed simultaneously, or in a different order than shown in FIG. 4. For example, in some instances, not every token in a vocabulary (V) has a corresponding random number generated based on PRF.

At 402, *n* tokens (e.g., {*t*₁, *t*₂, ... , *tₙ*} of Algorithm 1) preceding a target position is obtained. The target position may be a next position in a sequence being generated by a language model, or a specific position in a sequence under verification.

At 404, *n* values (*hᵢ* of Algorithm 1, *i* = 1, 2, ... , *n*) are generated for the *n* tokens using a deterministic function. In some implementations, the deterministic function can be a keyed Hash function.

At 406, a first seed (e.g., seed 212 of FIG. 2B) is generated based on the *n* values using a majority voting function. In some implementations, the majority voting function can be a bit-wise majority voting function, and the seed can have the same bit length as each of the *n* values.

At 408, *K* random numbers, each corresponding to a token in a vocabulary (*V*) of *K* tokens, are generated using a pseudorandom function (PRF) based on the first seed.

At 410, a probability of a k-th token (*k* = 1, 2, ..., *K*) being sampled for the target position is determined, based on a random number of the K random numbers that corresponds to the k-th token in the vocabulary of K tokens. In some implementations, an initial probability of the *k^{th}* token being sampled for the target position can be determined based on a logit of the *k^{th}* token, and the probability of the *k^{th}* token being sampled for the target position can be determined based on the initial probability and the random number corresponding to the *k^{th}* token. In some implementations, the probability can be determined using techniques as described with respect to Algorithm 2 and process 500.

At 412, a token for the target position is sampled from the vocabulary of K tokens.

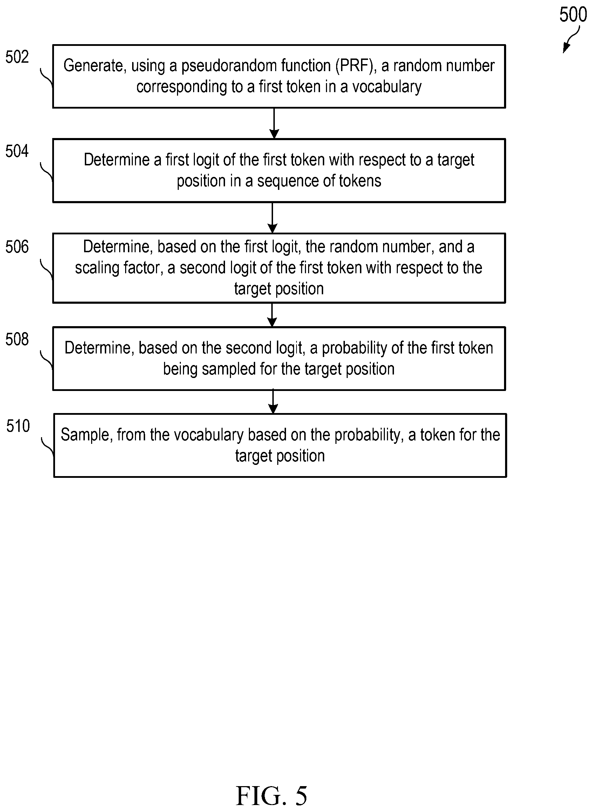

FIG. 5 is a flow diagram of an example process 500 of managing watermarks for language models. The example process 500 can be implemented by one or more servers executing a language model (e.g., server(s) 104 of FIG. 1). The language model can be a watermarked language model that can embed a verifiable signal as a watermark into its generated content. The operations shown in process 500 may not be exhaustive, and other operations can be performed as well before, after, or in between any of the illustrated operations. Further, some of the operations may be omitted, performed simultaneously, or in a different order than shown in FIG. 5.

At 502, a random number (e.g., ${r}_{i}^{j}$ of Algorithm 2) corresponding to a first token (e.g., *tⱼ* E *V* of Algorithm 2) in a vocabulary (*V*) is generated using a pseudorandom function (PRF).

At 504, a first logit (e.g., ${l}_{i}^{j}$ of Algorithm 2) of the first token is determined with respect to a target position in a sequence of tokens (e.g., the i-th position in ***t*** = {*t*₁, *t*₂, ... } of Algorithm 2). In some implementations, the first logit can be determined based on the relevance of the first token with respect to a user prompt and/or a context of the target position.

At 506, a second logit (e.g., ${{l}_{i}^{j}}^{˜}$ of Algorithm 2) of the first token is determined with respect to the target position. The second logit is determined based on the first logit, the random number, and a scaling factor (e.g., *λ*). The scaling factor can modulate a weight of the random number in the second logit. In some implementations, the second logit is determined based on a sum of the first logit and a product of the random number and the scaling factor. In some implementations, a correction term (e.g., *Cᵢ* of Algorithm 2) can be introduced into the second logit to mitigate the effect of the random number scaled by the scaling factor on the sampling probability.

At 508, a probability (e.g., ${p}_{i}^{j}$ of Algorithm 2) of the first token being sampled for the target position is determined based on the second logit, e.g., using a normalization function.

At 510, a token (e.g., *tᵢ* of Algorithm 2) for the target position is sampled from the vocabulary based on the probability.

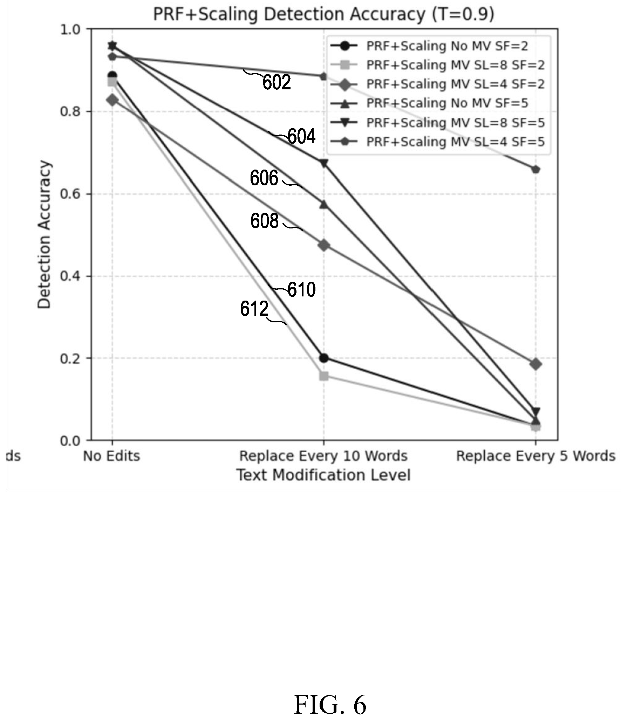

FIG. 6 illustrates example effects of implementing majority voting-based seeding and/or scaling of watermarking strength. Plots in FIG. 6 show changes in the accuracy of watermark detection with respect to a text modification level (e.g., from no edits to a text generated by a watermarked language model, to changing one word in every 5 words in the text) under varied conditions, such as whether majority voting is employed, different seed length (SL), different scaling factors (SF).

As shown by plots 602, 604 and 606, by generating multiple Hash outcomes and employing majority voting to generate the seed to PRF, the accuracy of watermark detection can be improved, compared to the scenario where the seed is generated based on a single Hash outcome without majority voting. Further, as shown by plots 602 and 608, by increasing the value of the scaling factor, the watermark strength can be enhanced, and the accuracy of watermark detection can be improved.

In addition, as shown by plots 604 and 612 (or plots 602 and 608), the accuracy of watermark detection may be negatively affected by the seed length. The longer the seed, the more likely that the seed is affected by text modification. For example, if the seed has *m* bits, and the seed is generated based on *n* preceding tokens, the probability of the seed to remain unchanged if one token of *n* preceding tokens is modified is: ${\left(1-P\right)}^{m}$ $where P = \frac{\left(\begin{matrix}2 k + 1 \\ k + 1\end{matrix}\right)}{{2}^{2 k + 1}} ⋅ \frac{k + 1}{2 k + 1} , where n = 2 k + 1$ An example seed length may be 4 bits, 8 bits, or other suitable short length to ensure the accuracy of the watermarking scheme.

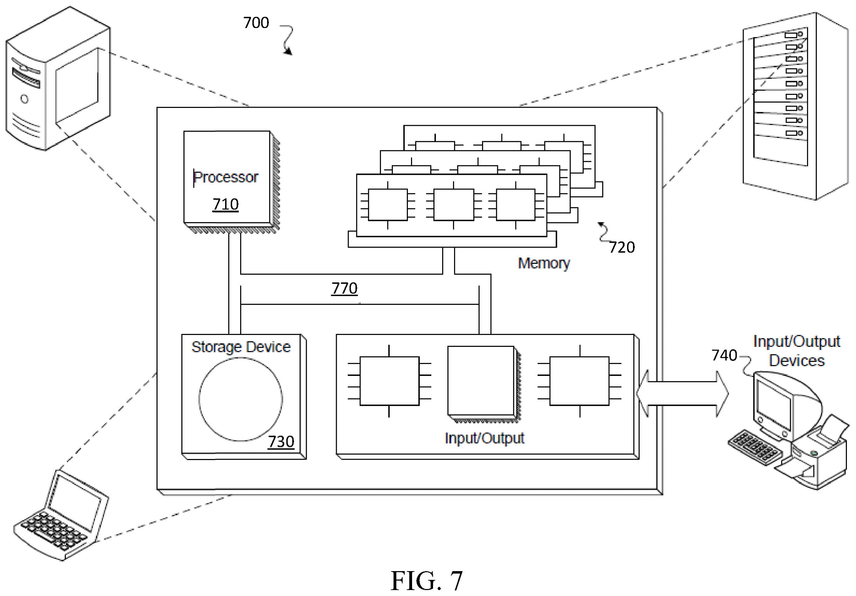

FIG. 7 is an example computer system 700. The computer system 700 can be used for the operations described in association with the implementations described herein, for example, one or more operations described with respect to example process 400 and/or 500, as a client device (e.g., the client device 102 of FIG. 1), and/or a server (e.g., the server 104 of FIG. 1). For example, the system 700 may be included in computing devices of the one or more online components and/or the one or more offline components. The system 700 includes a processor 710, a memory 750, a storage device 730, and an input/output device 740. The components 710, 750, 730, and 740 are interconnected using a system bus 790. The processor 710 is capable of processing instructions for execution within the system 700. In some implementations, the processor 710 is a single-threaded processor. In some implementations, the processor 710 is a multi-threaded processor. The processor 710 is capable of processing instructions stored in the memory 550 or on the storage device 730 to display graphical information for a user interface on the input/output device 740.

The memory 750 stores information within the system 700. In some implementations, the memory 750 can be a computer-readable medium. The memory 750 can be a volatile memory unit or a non-volatile memory unit. The storage device 730 is capable of providing mass storage for the system 700. The storage device 730 is a computer-readable medium. The storage device 730 may be a floppy disk device, a hard disk device, an optical disk device, or a tape device. The input/output device 740 provides input/output operations for the system 700. The input/output device 740 includes a keyboard and/or pointing device. The input/output device 740 includes a display unit for displaying graphical user interfaces.

In this specification the term "engine" will be used broadly to refer to a software based system or subsystem that can perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially be claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method (400) comprising:
obtaining (402) *n* tokens preceding a target position;
generating (404), using a deterministic function, *n* values for the *n* tokens;
generating (406) a first seed (212) based on the *n* values using a majority voting function;
generating (408), using a pseudorandom function based on the first seed, *K* random numbers each corresponding to a token in a vocabulary of *K* tokens, where *n* and *K* are positive integers;
determining (410), based on a random number of the *K* random numbers that corresponds to a *k^{th}* token (*k* = 1, 2, ..., *K*) in the vocabulary of *K* tokens, a probability of the *k^{th}* token being sampled for the target position; and
sampling (412), from the vocabulary of *K* tokens, a token for the target position.

2. The method (400) of claim 1, wherein the deterministic function comprises a Hash function configured to generate a value having *m* bits based on a token and a key, where *m* is a positive integer.

3. The method (400) of claim 1, wherein the *n* values and the first seed each have *m* bits, where *m* is a positive integer, and
wherein a *j^{th}* bit (*j* = 1, 2, ... *m*) in the first seed is a majority bit among a *j^{th}* bit of each of *n* values.

4. The method (400) of claim 1, comprising:
for the *k^{th}* token in the vocabulary of *K* tokens:
determining, an initial probability of the *k^{th}* token being sampled for the target position based on a logit of the *k^{th}* token; and
determining the probability of the *k^{th}* token being sampled for the target position based on the initial probability and the random number corresponding to the *k^{th}* token.

5. The method (400) of claim 1, comprising:
obtaining a sequence of *L* tokens, where *L* is a positive integer greater than *n*;
for an *l^{th}* token (*l = n* + 1, *n* + 2, *... , L*) in the sequence of *L* tokens:
determining *n* values using the deterministic function based on *n* tokens preceding the *l^{th}* token;
determining, using the majority voting function based on the *n* values, a second seed; and
determining, using the pseudorandom function based on the second seed, a random number corresponding to the *l^{th}* token.

6. The method (400) of claim 5, further comprising:
determining whether a sum of *W* random numbers corresponding to *W* tokens in the sequence of *L* tokens is greater than a predefined threshold, where *W* is a positive integer smaller than *L*; and
in response to determining that the sum of the *W* random numbers is greater than the predefined threshold, determining that the sequence of *L* tokens is generated by a watermarked language model.

7. The method (400) of claim 1, wherein the method is implemented by one or more servers running a watermarked language model.

8. One or more computer-readable storage media storing one or more instructions that, when executable by one or more computers, cause the one or more computers to perform operations comprising:
obtaining *n* tokens preceding a target position;
generating, using a deterministic function, *n* values for the *n* tokens;
generating a first seed based on the *n* values using a majority voting function;
generating, using a pseudorandom function based on the first seed, *K* random numbers each corresponding to a token in a vocabulary of *K* tokens, where *n* and *K* are positive integers;
determining, based on a random number of the *K* random numbers that corresponds to a *k^{th}* token (*k* = 1, 2, ... , *K*) in the vocabulary of *K* tokens, a probability of the *k^{th}* token being sampled for the target position; and sampling, from the vocabulary of *K* tokens, a token for the target position.

9. The one or more non-transitory computer-readable storage media of claim 8, wherein the deterministic function comprises a Hash function configured to generate a value having *m* bits based on a token and a key, where *m* is a positive integer.

10. The one or more non-transitory computer-readable storage media of claim 8, wherein the *n* values and the first seed each have *m* bits, where *m* is a positive integer, and
wherein a *j^{th}* bit (*j* = 1, 2, ... *m*) in the first seed is a majority bit among a *j^{th}* bit of each of *n* values.

11. The one or more non-transitory computer-readable storage media of claim 8, wherein the operations comprise:
for the *k^{th}* token in the vocabulary of *K* tokens:
determining, an initial probability of the *k^{th}* token being sampled for the target position based on a logit of the *k^{th}* token; and
determining the probability of the *k^{th}* token being sampled for the target position based on the initial probability and the random number corresponding to the *k^{th}* token.

12. The one or more non-transitory computer-readable storage media of claim 8, wherein the operations comprise:
obtaining a sequence of *L* tokens, where *L* is a positive integer greater than *n*;
for an *l^{th}* token (*l = n* + 1, *n* + 2, ... , *L*) in the sequence of *L* tokens:
determining *n* values using the deterministic function based on *n* tokens preceding the *l^{th}* token;
determining, using the majority voting function based on the *n* values, a second seed; and
determining, using the pseudorandom function based on the second seed, a random number corresponding to the *l^{th}* token.

13. The one or more non-transitory computer-readable storage media of claim 12, wherein the operations further comprise:
determining whether a sum of *W* random numbers corresponding to *W* tokens in the sequence of *L* tokens is greater than a predefined threshold, where *W* is a positive integer smaller than *L*; and
in response to determining that the sum of the *W* random numbers is greater than the predefined threshold, determining that the sequence of *L* tokens is generated by a watermarked language model.

14. A computer-implemented system (700), comprising:
one or more computers; and
one or more computer memory devices interoperably coupled with the one or more computers and having non-transitory computer-readable storage media storing one or more instructions that, when executed by the one or more computers, perform operations of any of the method of claims 1-7.
